# EUROPEAN PATENT APPLICATION

(11) **EP 2 464 114 A1**
(43) Date of publication of application: **13.06.2012**
(21) Application number: 10194690.3
(22) Date of filing: 13.12.2010
(51) Int. Cl.: H04N 7/24, H04N 7/26, H04N 21/234, H04N 21/235, H04N 21/858, H04N 21/8545, H04N 21/431

(54) **Procedure and device for the transport of markers**

(71) Applicant: Alcatel-Lucent España, S.A., 28050 Madrid (ES)
(72) Inventor: Martin Vila, José Jéronimo, 28050 Madrid (ES); Villegas Nuñez, Alvaro, 28050 Madrid (ES); Perez García, Pablo, 28050 Madrid (ES)
(74) Representative: Elzaburu Marquez, Alberto

(57) **Abstract**

A visual code marker transport system comprised of the reception of non-encoded, non-compressed video frames via a device (17) generator; the generation of visual code markers; the insertion in real time of the visual code markers thus generated in a video layer; the transmission of the frames generated in the video layer to a content distributor (broadcaster) for the compression or coding of the frames, and their broadcasting in video stream over the transfer level towards the network side; detecting and identification by means a network server device (14) of the visual code markers and transform in a digital mark in a transport layer; broadcasting of the transport layer towards the network side and client side via a multimedia content broadcasting network (13).

## Description

### SCOPE OF THE INVENTION

This invention refers, in general, to a procedure for the transport and decoding of visual code markers associated with audiovisual content broadcast as video stream via a multimedia content broadcasting network.

### STATE OF THE ART

At present, operators of digital information systems broadcasting radio and television signals receive audiovisual content from a range of multimedia generating sources and group them in a video stream, or, in other words, television and radio channels to be broadcast over a television network to a series of TV subscribers.

A television channel includes a continuous succession of audiovisual content segments, into which data markers are inserted so that devices connected to the transport network can launch pre-established applications and/or so that on reception on the subscriber side, a set-top box activates a pre-established application while the images are being shown on the chosen channel, at a certain time, on the subscriber's audiovisual screen.

Current systems for the distribution of audiovisual content from the content provider, through the broadcaster, to the terminal of subscriber, require that data markers be inserted into the content provided to the broadcaster.

Consequently, the content provider must be conversant with the procedure for the insertion and synchronisation of the data markers to be broadcast from the network side to the client side via video stream.

In general, the content provider works with non-compressed audio and video signals, and data markers are, in general, synchronised by means of transport layer parameters.

At times, content provider and broadcaster are associated and form part of the same entity.

Accordingly, this merger of provider and broadcaster simplifies the insertion, management and synchronisation of content and markers as a video stream.

However, on occasions in a digital television platform, content provider and broadcaster are two separate entities, and the insertion, management and synchronisation of content and markers in real time requires a greater computational load and is, therefore, more complex.

Accordingly, the content provider cannot synchronise the markers in the broadcaster's network directly in real time.

### SUMMARY

The purpose of this invention is to solve one or more of these problems, by means of a procedure of decoding of visual marks and translating in digital data marks for transporting together the video stream as defined in the claims.

According to one implementation, the visual code marker transport system comprises the reception of non-encoded, non-compressed video frames via a code generator; the generation of visual code markers; the insertion of the visual code markers thus generated in a video layer; the transmission of the frames generated in the video layer to a broadcaster; the compression or coding of the frames, and their broadcasting in video stream over the transport layer towards the network side and client side via a multimedia content broadcasting network

On the network side, a network server receives the video stream and decodes it. The decoded data stream is transmitted to a detection device to detect visual code markers transported over the video layer within the video stream.

When the detection device finds a visual code marker, it translates it into a digital marker or binary code, which is then transported over the transport layer in a parallel channel synchronised with the video and audio channels broadcast toward the client side, which includes a range of client devices.

A client device, such as a set-top box, decodes the signals transported via the transport layer channels, to show multimedia content on an audiovisual screen and also launch applications associated with the digital markers received.

Visual markers are images that are inserted into a video layer. These markers may be one-dimensional and two-dimensional barcodes, watermarks and other visible or non-visible codes, etc..

Similarly, on the network side, a network application device has been adapted to receive video and audio channels and other parallel channels synchronised with the former channels and broadcast over the transport level, to read the digital markers and take the corresponding actions.

One advantage of this implementation is that the content provider inserts the visual code markers at the same time that it provides the multimedia audiovisual content, independently from the digital television platform and the transport network carrying the content generated.

Another advantage is that perfect synchronisation is obtained between the insertion of the visual code markers in a predetermined content generated by the content provider and the procedure for their broadcasting.

Yet another advantage is that, on the client side, client devices can be used to receive digital markers associated with visual code markers. These are then interpreted without having to increase the complexity of the client device.

### BRIEF DESCRIPTION OF THE FIGURES

Some embodiments of apparatus and /or methods in accordance with embodiments of the present invention are now described, by way of example only, and with reference to the accompanying drawings, in which:

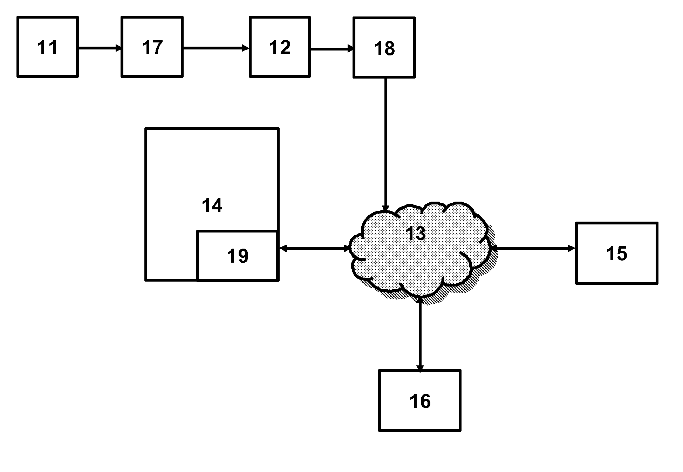

figure 1 schematically illustrates a multimedia content broadcasting system.

### DESCRIPTION OF EMBODIMENTS

Figure 1 shows a digital television platform, where a range of different sources 11 of audiovisual content, such as television or radio, transmit their audiovisual content to an audiovisual content broadcaster or distributor 12 to broadcast the encoded audiovisual content as a video stream via a multimedia content broadcasting network 13.

The delivery of multimedia content from the content source 11 to the broadcaster 12 normally follows a transport protocol in real time protocol, for instance, RTP protocol or a non-real time transport protocol, for instance, File Transfer Protocol FTP or like.

The audiovisual content source or provider 11 generates non-encoded and non-compressed video streams and transmits them to a device 17 generator which generates visual code markers, in other words, code marks inserted in the video layer, such as one-dimensional and two-dimensional bar codes, watermarks and other codes, etc. The code generator 17 inserts visual code markers in real time in the video layer.

The video layer frames, including visual code marks, are sent to the broadcaster 12 where the frames are compressed or encoded in an encoder 18, included in the broadcaster 12.

The broadcaster 12 transmits the video stream generated over a transport layer towards the network side itself and to the client side, via the TV broadcast network 13.

Accordingly, the encoded markers are broadcast along with the encoded video and are synchronised with same, as the content provider inserts the visual code markers into the video stream corresponding to the audiovisual content in real time.

A network server 14 connected to the TV broadcast network 13 receives the video stream broadcast by the broadcaster 12 in the transport layer, to be decoded.

The network server 14 includes a detection device 19, which receives the decoded frames in order to detect and interpret any visual code markers contained therein. When a visual code marker is identified, it is transformed into a digital marker or binary code for insertion in the transport layer within a parallel channel, synchronised with the video and audio channels corresponding to the audiovisual content generated by the content provider 11 and broadcast towards the client side.

On the client side, a set-top box 15 receives the video stream, which includes video channels, audio channels and additional channels with specific information for the set-top box 15.

The set-top box 15 decodes the audio and video channels to be shown on an audiovisual screen and, also, recognises the digital markers received in the parallel channel and implements the corresponding actions.

For example, the set-top box 15 can launch an interactive application requiring a subscriber response while displaying audiovisual content selected by the subscriber; insert advertising, etc.

Each end subscriber may have several client devices, such as the set-top box or decoder 15 connected, in turn, to an audiovisual screen, personal computer, IP voice terminal, telephone, etc.

Once the set-top box 15 has launched the interactive application, the application displays a message or banner over the multimedia content, requesting end subscriber participation.

In this case, the digital marker includes the time during which the subscriber may respond.

In another implementation, a network application device 16 receives the data flow broadcast from the network server 14 on the network side.

The network application device includes a decoder to decode the video stream and, on the basis of the decoded signal, reads the digital makers in the parallel channel to the video and audio channels, to implement the corresponding actions.

For example, when the application device 16 locates a digital marker, it may insert video frames relating to a commercial break into the video stream for a certain time, and transmit the video stream into which it has inserted the commercial break towards the client side.

The transport layer transports the video stream generated by the application device 16 to the client side.

It should be noticed that in certain cases the multimedia content broadcaster 12 includes the network server 14. Accordingly, the broadcaster 12 transmits a video stream directly including digital markers to the client side over a transport layer.

Likewise, the application device 16 can also receive the video stream containing digital markers over the transport layer.

## Claims

1. **A procedure for the transport of markers** in a multimedia content broadcasting network (13); **characterised in that** it comprises the following steps:
- Receiving of audiovisual content packets generated by a content provider (11),
- Generating of a visual code marker, including information regarding the activation of an application on the network side and/or the client side, by means a device (17) generator,
- Inserting of a visual code marker embedded within a video layer synchronised with the audiovisual content for transmission to a broadcasting unit (12),
- Detecting, by means of the broadcasting unit (12), of the visual code marker transported over the transport layer and its transformation into a digital marker to be embedded in the transport layer,
- Broadcasting of the digital marker and the audiovisual content towards the client side, embedded in a transport layer, and
- Executing of the application according to the proceeding associated to the digital mark.

2. **Procedure** in accordance with claim 1; **characterised in that** the procedure comprises the detection of a digital marker embedded in the video stream received by a set-top box (15).

3. **Procedure** in accordance with claim 2; **characterised in that** the procedure comprises the launch of an associated application in the video stream received.

4. **Procedure** in accordance with claim 3; **characterised in that** the digital marker comprises information regarding the activation of the application in a client device connected to the set-top box (15).

5. **Procedure** in accordance with claim 1; **characterised in that** the procedure comprises the detection of a digital marker embedded in the video stream received by a network application device (16).

6. **Procedure** in accordance with claim 5; **characterised in that** the procedure comprises the launch of an associated application in the video stream received in the network application device (16).

7. **Procedure** in accordance with claim 6; **characterised in that** the digital marker comprises information regarding the procedure for the activation of the application in the network application device (16), defining its mode of operation when the digital marker is identified.

8. **Procedure** in accordance with claim 7; **characterised in that** it comprises the insertion of a commercial break into the transport layer, to be transported towards the network side.

9. A multimedia content **provider** in a multimedia content broadcast system; **characterised in that** the content provider (11) is adapted to generate and transmit non-encoded video frames to a device generator (17) in order to generate visual code markers to be inserted into the video layer.

10. Multimedia content **provider** in accordance with claim 9; **characterised in that** the content provider (11) transmits the synchronised video frames and visual code markers over the video layer towards a content broadcaster (12).

11. A **multimedia content broadcasting unit** in a multimedia content broadcasting system; **characterised in that** in the multimedia content broadcasting unit (12) is adapted to receive video frames and synchronised visual code markers over the video layer and to broadcast them over the transport layer of a transport protocol towards the client side via a television distribution network (13).

12. A **network server** in a multimedia content broadcasting system; **characterised in that** the network server (14) is adapted to decode the video stream transported over the transport layer and **in that** it comprises a detection device (19) adapted to locate and interpret decoded visual code markers in the decoded frame.

13. Network **server** in accordance with claim 12; **characterised in that** the detection device (19) is adapted to transform visual code markers into digital markers or binary code to be inserted into the transport layer in a parallel channel and synchronised with the video and audio channels carrying the audiovisual content generated by the content provider (11), which are broadcast towards the client side.

14. An **application device** in a multimedia content broadcasting system; **characterised in that** the application device (16) is adapted to decode a video stream and find digital markers embedded in it, and to launch applications associated with the video stream.
